# EUROPÄISCHE PATENTSCHRIFT

(11) **EP 3 491 863 B1**
(45) Veröffentlichungstag und Bekanntmachung des Hinweises auf die Patenterteilung: **29.04.2020**
(21) Anmeldenummer: 17748644.6
(22) Anmeldetag: 27.07.2017
(51) Int. Cl.: H04W 12/10, H04W 8/18, G06F 21/57, H04W 4/00

(54) **INTEGRIERTES TEILNEHMERIDENTIFIKATIONSMODUL MIT EINEM KERNBETRIEBSSYSTEM UND EINEM ANWENDUNGSBETRIEBSSYSTEM**
INTEGRATED SUBSCRIBER IDENTITY MODULE HAVING A CORE OPERATING SYSTEM AND AN APPLICATION OPERATING SYSTEM
MODULE D'IDENTITÉ D'ABONNÉ INTÉGRÉ AYANT UN SYSTÈME D'EXPLOITATION CENTRAL ET UN SYSTÈME D'EXPLOITATION D'APPLICATION

(30) Priorität: 28.07.2016 DE 102016009232
(43) Veröffentlichungstag der Anmeldung: 05.06.2019
(73) Patentinhaber: Giesecke+Devrient Mobile Security GmbH, 81677 München (DE)
(72) Erfinder: ECKARDT, Stefan, 82291 Mammendorf (DE)
(86) Internationale Anmeldenummer: PCT/EP2017/000912
(87) Internationale Veröffentlichungsnummer: WO 2018/019424

(56) Entgegenhaltungen:
- WO-A1-2013/188830
- WO-A1-2014/036021
- WO-A1-2014/198340
- US-A1- 2003 182 560

## Beschreibung

### Gebiet der Erfindung

Die Erfindung betrifft ein Chipset für ein mobilfunkfähiges Endgerät, in dem in einem Secure Processor des Chipset ein integriertes Teilnehmeridentitäfsmodul eingerichtet ist, in dem ein Betriebssystem des Secure Processor eingerichtet öder einrichtbar ist, wobei das Betriebssystem ein Core-OS und ein Anwendungs-OS umfasst.

### Stand der Technik

Die Welt ist mobil vernetzt, und die mobile Vernetzung schreitet weiter. Mobilfunkfähige Endgeräte kommunizieren über Mobilfunknetze. Zu den klassischen mobilfunkfähigen Endgeräten zählen die mobilen Endgeräte wie Smartphones und Mobiltelefone und mobilfunkfähige Tablets. Zu mobilfunkfähigen Endgeräten zählen weiter Regelungsgeräte (Steuerungsgeräte oder Messgeräte oder kombinierte Steuer/Messgeräte) für industrielle Einrichtungen im kommerziellen oder im privaten Umfeld. Industrielle Einrichtungen sind beispielsweise Produktionsanlagen, die ein oder mehrere Regelungsgeräte (Endgeräte) haben, die über ein Mobilfunknetz mit einem Hintergrundsystem oder/und miteinander kommunizieren können. Weitere industrielle Einrichtungen sind Smart Home Einrichtung wie z.B. Heizungen oder Stromverbraucher mit Endgeräten in Gestalt von Regelungsgeräten.

Das Endgerät hat ein Chipset mit einem oder mehreren Endgeräte-Chips zum Betrieb von Funktionen des Endgeräts. Aktuelle (und ältere) Smartphones haben beispielsweise typischerweise ein Chipset, das zumindest drei Endgeräte-Chips umfasst, nämlich einen Transceiver-IC, der die physikalische Funkkommunikation durchführt, einen Baseband-Prozessor BB (oder gleichbedeutend Modem), der Funktionen zur Datenübertragung über Funkkommunikation auf Protokollebene durchführt, und einen Application-Prozessor AP, auf welchem das Betriebssystem und Anwendungssoftware, z.B. Applikationen (z.B. Apps), ausgeführt werden. Als weitere Endgeräte-Chips können Transceiver-ICs für andere Funkkanäle vorgesehen sein, insbesondere für kurzreichweitige Funkkanäle wie NFC (NFC: near field communication) oder Bluetooth. Auf dem Chipset, insbesondere auf dem Application Processor AP, ist Firmware implementiert, d.h. spezielle Software, durch welche grundlegende Funktionalitäten des Chipset verwirklicht sind. Zur Firmware gehört z.B. das Betriebssystem des Application Processor und evtl. das Betriebssystem weiterer Prozessoren, die ein Betriebssystem haben, hardware-nahe Software z.B. des Transceiver-IC und des Baseband-Prozessor BB, und unter Umständen Programmierschnittstellen (APIs).

Zur Nutzung eines mobilfunkfähigen Endgeräts, wie Smartphone, Mobiltelefon, in einem Mobilfunknetzwerk eines Netzbetreibers enthält das Endgerät ein Teilnehmeridentitätsmodul mit einem Subskriptions-Profil oder kurz Profil. Das Profil bewerkstelligt die Konfiguration des Endgeräts und der Verbindung des Endgeräts im Mobilfunknetz. Das Profil ist durch einen strukturierten Datensatz gebildet, der den Aufbau, Betrieb und Abbau einer Verbindung des Endgeräts im Mobilfunknetzwerk ermöglicht, und umfasst beispielsweise einen kryptographischen Authentisierungs-Schlüssel Ki und eine International Mobile Subscriber Identity IMSI.

Das Teilnehmeridentitätsmodul kann herkömmlicherweise in Träger unterschiedlicher Formfaktoren integriert sein, insbesondere Plug-In und Embedded Träger. Teilnehmeridentitätsmodule in Trägern vom Formfaktor Plug-In (z.B. klassische SIM-Karte) und Embedded (zum Einlöten in ein Endgerät vorgesehenes Modul) sind auf einem dedizierten, eigenen Chip oder SoC (System-on-Chip) angeordnet.

Ein neueres Konzept für den Formfaktor eines Teilnehmeridentitätsmoduls sind integrierte Teilnehmeridentitätsmodule, die auf einem Endgeräte-Chip oder SoC (System-on-Chip) des Endgeräts mit integriert sind, also keinen eigenen Chip besitzen. Integrierte Teilnehmeridentitätsmodule werden mit dem Zusatz "integrated" oder "i" versehen und z.B. als integrated UICC, iUICC, iSIM oder iUSIM bezeichnet. Das integrierte Teilnehmeridentitätsmodul ist bei diesem Konzept als Secure Processor in einen anderen Endgeräte-Chip, z.B. in den Baseband Processor oder den Application Processor, integriert. Der Secure Processor kann z.B. als ARM SC300-Core oder ein vergleichbarer sicherer Prozessor mit hohem Sicherheitsniveau gestaltet sein. Nachteilig an einem solchen Secure Processor ist, dass jeglicher Speicherplatz aufgrund der Sicherungsmaßnahmen hohe Kosten hat, so dass der im Secure Processor verfügbare Speicher meistens möglichst gering gehalten wird. Um das Problem des geringen Speicherplatzes im Secure Processor zu lindern, wird im iUICC Konzept generell vorgeschlagen, im Chipset einen außerhalb des Secure Processor, aber innerhalb des Chipset, angeordneten externen nicht-flüchtigen Speicher vorzusehen, in dem Speicherinhalte derart gesichert, z.B. verschlüsselt, abgelegt werden, dass nur der Secure Processor sie nutzen kann.

Der Secure Processor hat ein Betriebssystem, das funktionell zu einem SIM-Karten Betriebssystem identisch oder vergleichbar oder analog gestaltet ist. Das Secure Processor Betriebssystem ist beispielsweise vom Grundsatz her gemäß einem Telekommunikations-Standard wie ETSI TS 102 221 oder 3GPP TS 31.102 gestaltet, wonach im Secure Processor ein Dateisystem (File System) vorgesehen ist und Authentisierungsmaßnahmen vorgesehen sind.

SIM-Karten Betriebssysteme werden vom Hersteller oder Herausgeber zertifiziert, um Kunden ein nachweisbares Sicherheitsniveau anbieten zu können. Der Prozess der Zertifizierung eines SIM-Karten Betriebssystems ist aufwändig. Daher wird aus praktischen Gründen teilweise ein SIM-Karten Betriebssystem in ein Core-OS und ein Anwendungs-OS aufgeteilt. Das Core-OS umfasst grundlegende Funktionalitäten, insbesondere Funktionalitäten zur Ansteuerung der physikalischen Elemente des Chips, z.B. der Speicherzellen des zugrunde liegenden Halbleitermaterials, der SIM-Karte. Das Anwendungs-OS umfasst anwendungsorientierte Funktionalitäten der SIM-Karte, z.B. Funktionalitäten zum Ansprechen des Dateisystems (File System) und zum Durchführen von Authentisierungen. Das Core-OS wird üblicherweise vom Halbleiterhersteller erstellt und zertifiziert. Das Anwendungs-OS wird üblicherweise von einem SIM-Karten Hersteller oder Herausgeber erstellt und zertifiziert.

Das Dokument WO 2013/188830 A1 aus der Stand der Technik offenbart, dass ein mobiles Endgerät einen Prozessor und einen mit dem Prozessor gekoppelten Speicher beinhaltet, wobei der Speicher ein Betriebssystem speichert. Wenn der Benutzer des mobilen Endgeräts eine sicherheitsrelevante Anwendung herunterladen möchte, die auf dem mobilen Endgerät installiert werden soll, wird ein Anwendungsmodul heruntergeladen und im Speicher gespeichert, wobei das Anwendungsmodul einen Anwendungslader und die Anwendung umfasst. Der Anwendungslader löst ein Application Programming Interface Module (API) innerhalb des Betriebssystems aus, um einen oder mehrere Teile des Betriebssystems (z.B. einen Netzwerkstapel) zu authentifizieren. Sobald der Netzwerkstapel authentifiziert ist, wird ein sicherer Kommunikationskanal zwischen dem mobilen Endgerät und einem entfernten Server eingerichtet, so dass ein Anwendungsauthentifizierungsmodul innerhalb des Betriebssystems die Authentifizierung der Anwendung durchführen kann. Sobald die Anwendung authentifiziert ist, erkennt der Anwendungslader eine vertrauenswürdige Ausführungsumgebung (Trusted Execution Environment)auf dem mobilen Endgerät und installiert die Anwendung darin. Eine vertrauenswürdige Ausführungsumgebung kann eine SIM-Karte, ein anderes Secure Element oder eine sichere virtuelle Maschine sein.

US200318252560 offenbart ein mobiles Endgerät, in dem die normalerweise über ein Teilnehmer-Identitätsmodul (SIM)implementierten Sicherheitsfunktionen in einen Anwendungsprozessor integriert sind. Somit erfüllt eine einzige integrierte Schaltung (Integrated Circuit)eine Anwendungsverarbeitungsfunktion und eine SIM-Funktion.

### Zusammenfassung der Erfindung

Der Erfindung liegt ein Chipset für ein mobilfunkfähiges Endgerät zu Grunde. In dem Chipset ist in einem Secure Processor des Chipset ein integriertes Teilnehmeridentitätsmodul eingerichtet, das die Nutzung von Subskriptions-Profilen ermöglicht. Die Datensätze nutzbarer Subskriptions-Profile müssen dabei nicht notwendig im Secure Processor dauerhaft gespeichert sein, sondern können auch in einem, später noch erläuterten, externen NVM des Chipset liegen. Die Profile müssen nur im Secure Processor ausführbar sein. In dem Secure Processor ist ein Betriebssystem des Secure Processor eingerichtet oder einrichtbar. Das Betriebssystem umfasst ein Core-OS (Core-Betriebssystem) und ein Anwendungs-OS (Anwendungs-Betriebssystem), oder besteht aus genau diesen beiden Betriebssystem-Komponenten Core-OS und Anwendungs-OS. Der Erfindung liegt die Aufgabe zu Grunde, ein Chipset anzugeben, bei dem ein Hersteller, Herausgeber oder Anbieter des Anwendungs-OS die Möglichkeit hat, ein Core-OS, das von einem anderen Hersteller, Herausgeber oder Anbieter übernimmt, auf Vertrauenswürdigkeit zu überprüfen und bedarsfweise sein eigenes Anwendungs-OS vor nicht-vertrauenswürdigen Core-OS zu schützen.

Die Aufgabe wird gelöst durch ein Chipset nach Anspruch 1. Vorteilhafte Ausgestaltungen der Erfindung sind in abhängigen Ansprüchen angegeben.

Das erfindungsgemäße Chipset nach Anspruch 1 ist dadurch gekennzeichnet, dass das Anwendungs-OS eine Core-OS-Verifizierungs-Einrichtung umfasst, die dazu eingerichtet ist, anlässlich seiner Inbetriebnahme die Integrität des Core-OS zu verifizieren und nur höchstens im Fall erfolgreicher Verifizierung des Core-OS die Inbetriebnahme fortzusetzen und im Fall nicht erfolgreicher Verifizierung eine Fehlermaßnahme zu veranlassen oder/ und die Inbetriebnahme zu unterbrechen oder beenden.

Aufgrund der Core-OS-Verifizierungs-Einrichtung hat das Anwendungs-OS (Anwendungs-Betriebssystem-Teil) die Möglichkeit, zweifelhafte, ausdrücklich verbotene oder nicht-vertrauenswürdige Core-OS (z.B. solche anderer oder verbotener Hersteller, Herausgeber oder Anbieter) als Anlass zu nehmen, selbst nicht weiter in Ausführung zu gehen und dadurch das Anwendungs-OS selbst vor dem Core-OS zu schützen.

Somit ist gemäß Anspruch 1 ein Chipset mit einem Secure Processor mit in Anwendungs-OS und Core-OS geteiltem Betriebssystem geschaffen, bei dem ein Hersteller, Herausgeber oder Anbieter des Anwendungs-OS die Möglichkeit hat, ein Core-OS, das er von einem anderen Hersteller, Herausgeber oder Anbieter übernimmt, auf seine Vertrauenswürdigkeit zu überprüfen und bedarsfweise sein eigenes Anwendungs-OS vor nicht vertrauenswürdigen Core-OS zu schützen.

Gemäß der Erfindung umfasst das Chipset weiter einen Bootloader, der dazu eingerichtet ist, unmittelbar oder mittelbar zu erzwingen, dass das Anwendungs-OS bei seiner Inbetriebnahme die Core-OS-Verifizierungs-Einrichtung anwendet, um die Integrität des Core-OS zu verifizieren.

Das Chipset umfasst gemäß einer bevorzugten Ausführungsform der Erfindung weiter: - einen dem Secure Processor exklusiv zugeordneten internen sicheren Arbeitsspeicher; - einen im Chipset aber außerhalb des Secure Processor gelegenen externen nicht-flüchtigen Speicher, in dem ein - vorzugsweise verschlüsseltes - Speicherabbild des Core-OS gespeichert ist; - einen im Secure Processor implementierten Bootloader, der dazu eingerichtet ist, das Cores-OS aus dem externen nicht-flüchtigen Speicher in den internen sicheren Arbeitsspeicher zu laden, ggf. zu entschlüsseln, und dadurch in Betrieb zu nehmen. Die Ausführungsform mit dem Bootloader hat den zusätzlichen Vorteil, dass beim Hochfahren des Chipset das Core-OS durch den Bootloader ohne Einflussnahmemöglichkeit von außerhalb des Chipset direkt aufgerufen wird, so dass ein Umgehen des Core-OS unmöglich ist.

Gemäß einer weiteren bevorzugten Ausführungsform der Erfindung umfasst das Chipset weiter: - einen dem Secure Processor exklusiv zugeordneten internen sicheren Arbeitsspeicher; - einen im Chipset aber außerhalb des Secure Processor gelegenen externen nicht-flüchtigen Speicher, in dem ein-vorzugsweise verschlüsseltes - Speicherabbild des Anwendungs-OS gespeichert ist; - einen im Secure Processor implementierten Bootloader, der dazu eingerichtet ist, das Anwendungs-OS aus dem externen nicht-flüchtigen Speicher in den internen sicheren Arbeitsspeicher zu laden, ggf. zu entschlüsseln, und dadurch im internen sicheren Arbeitsspeicher in Betrieb zu nehmen. Die Ausführungsform mit dem Bootloader hat den zusätzlichen Vorteil, dass beim Hochfahren des Chipset das Anwendungs-OS durch den Bootloader ohne Einflussnahmemöglichkeit von außerhalb des direkt aufgerufen wird, so dass ein Umgehen des Anwendungs-OS und evtl. Einbinden eines anderen Anwendungs-OS unmöglich ist.

Wahlweise ist das Speicherabbild des Core-OS bzw. das Speicherabbild des Anwendungs-OS verschlüsselt im externen nicht-flüchtigen Speicher gespeichert ist und kann exklusiv vom Secure Processor zur Ausführung gebracht werden, aber nicht z.B. im allgemeinen Arbeitsspeicher ext RAM.

Wahlweise umfasst das Chipset weiter: - einen im Chipset aber außerhalb des Secure Processor gelegenen externen nicht-flüchtigen Speicher, in dem ein - vorzugsweise verschlüsseltes - Speicherabbild des Core-OS gespeichert ist; wobei das Anwendungs-OS dazu eingerichtet ist, das Speicherabbild des Core-OS auf Integrität zu verifizieren.

Die erfindungsgemäße Core-OS-Verifizierungs-Einrichtung ist wahlweise dazu eingerichtet, eine Prüfsumme oder einen Hashwert über das im externen nicht-flüchtigen Speicher gespeicherte Speicherabbild des Core-OS zu berechnen und auf Übereinstimmung oder Entsprechung mit einer Prüfsumme bzw. einem Hashwert aus einer Liste von Prüfsummen bzw. Hashwerten zulässiger oder zugelassener Core-OS zu verifizieren.

Die Liste für die zulässigen oder zugelassenen Core-OS ist wahlweise im Chipset gespeichert. Alternativ ist die Liste bei einem externen Server gespeichert. Die Liste kann auch sowohl im Chipset als auch bei einem externen Server gespeichert sein, wobei die Listen im Chipset und beim externen Server bedarfsweise miteinander synchronisiert werden.

Wahlweise ist die Core-OS-Verifizierungs-Einrichtung dazu eingerichtet, die Integrität des Core-OS mittels eines durch eine vertrauenswürdige externe Stelle erstellten Zertifikats zu verifizieren, insbesondere gegenüber eines Liste zulässiger Cores-OS.

### Kurze Beschreibung der Zeichnungen

Im Folgenden wird die Erfindung an Hand von Ausführungsbeispielen und unter Bezugnahme auf die Zeichnung näher erläutert, in der zeigt:
- Fig. 1: in schematischer Darstellung, ein Chipset gemäß einer Ausführungsform der Erfindung, mit einer Inbetriebnahme eines Core-OS durch einen Bootloader;
- Fig. 2: eine Ausführungsform eines erfindungsgemäßen Chipset, bei dem der Secure Processor direkt in den Baseband Controller integriert ist;
- Fig. 3: das Chipset aus Fig. 1, mit einer Inbetriebnahme eines AnwendungsOS durch den Bootloader und Authentisierung / Verifizierung des Core-OS durch das Anwendungs-OS;
- Fig. 4: die in Fig. 3 dargestellte Authentisierung / Verifizierung des Core-OS durch das Anwendungs-OS im Detail.

### Detaillierte Beschreibung von Ausführungsbeispielen

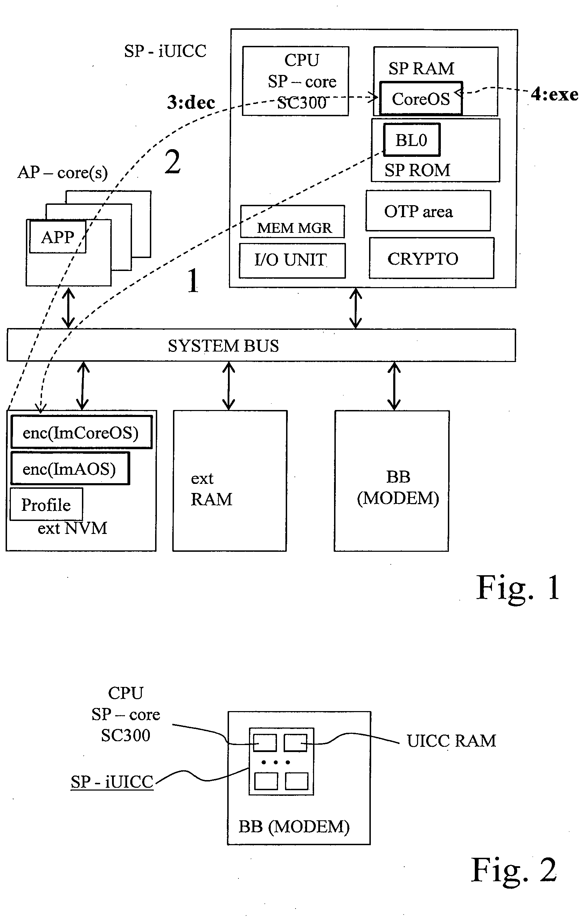

Fig. 1 zeigt, in schematischer Darstellung, ein Chipset gemäß einer Ausführungsform der Erfindung, mit einer Inbetriebnahme eines Core-OS durch einen Bootloader.

Das Chipset umfasst einen Secure Processor SP, der unter anderem die Funktion eines integrierten Teilnehmeridentitätsmoduls iUICC erfüllt. Der Secure Processor SP hat eine CPU oder - gleichbedeutend - einen Prozessor Core, eine Speicherverwaltung MEM MGR, eine Schnittstelle I/O Unit, einen internen, dem Secure Processor SP exklusiv zugewiesenen Arbeitsspeicher SP RAM, einen internen exklusiven Permanentspeicher SP ROM des Secure Processor SP (der ROM ist optional, stattdessen kann nur Flashspeicher vorgesehen sein), einen vergleichsweise kleinen speziell abgesicherten Permanentspeicher OTP area (in Speichertechnologie z.B. ROM, EEPROM oder Flash verwirklicht), und eine Krypto-Einheit CRYPTO, z.B. einen Crypto-Coprozessor.

Das Chipset umfasst weiter einen Application Processor AP mit - hier mehreren - Prozessor Cores (Prozessorkernen). Im Application Processor AP sind Applikationen als APPs implementiert.

Weiter umfasst das Chipset einen externen nicht-flüchtigen Speicher ext NVM, in dem eine verschlüsseltes Speicherabbild oder - gleichbedeutend - Image enc(ImCoreOS) eines Core-OS gespeichert ist. Weiter ist im ext NVM ein Speicherabbild oder - gleichbedeutend - Image enc(ImAOS) eines Anwendungs-OS gespeichert. Weiter sind im externen nicht-flüchtigen Speicher ext NVM ein oder mehrere verschlüsselte Subskriptions-Profile gespeichert.

Das Chipset umfasst zudem einen im Chipset allgemein zugänglichen externen Arbeitsspeicher ext RAM und einen Baseband Processor BB (Modem).

Die Komponenten SP, AP, ext NVM, ext RAM, BB des Chipset sind über einen System Bus miteinander verbunden.

Im Folgenden wird anhand von Fig. 1 ein Verfahren zur Inbetriebnahme des Core-OS durch den Bootloader BL0 beschrieben.

Der Betrieb des Chipset wird gestartet. Falls das Chipset in ein Smartphone eingebaut ist, wird der Betrieb des Chipset z.B. gestartet, indem das Smartphone am standardmäßigen Einschalter eingeschaltet wird.

Durch das Starten des Chipset wird der Bootloader BL0 gestartet. Der Bootloader (Schritte 1+2) lädt das verschlüsselte Speicherabbild enc(ImCoreOS) des Core-OS aus dem externen nicht-flüchtigen Speicher ext NVM in den internen exklusiven Arbeitsspeicher SP RAM des Secure Processor SP, (Schritt 3: dec) entschlüsselt das Speicherabbild, und (Schritt 4: exe) bringt das Core-OS im internen exklusiven Arbeitsspeicher SP RAM des Secure Processor SP zur Ausführung.

Gemäß Fig. 1 ist der Secure Processor SP als eigenständiger Prozessor dargestellt. Fig. 2 zeigt eine bevorzugte Ausführungsform eines erfindungsgemäßen Chipset, bei dem der Secure Processor SP direkt in den Baseband Controller BB des Chipset integriert ist. Ansonsten kann das Chipset und insbesondere der Secure Processor SP identisch wie in Fig. 1 gestaltet sein.

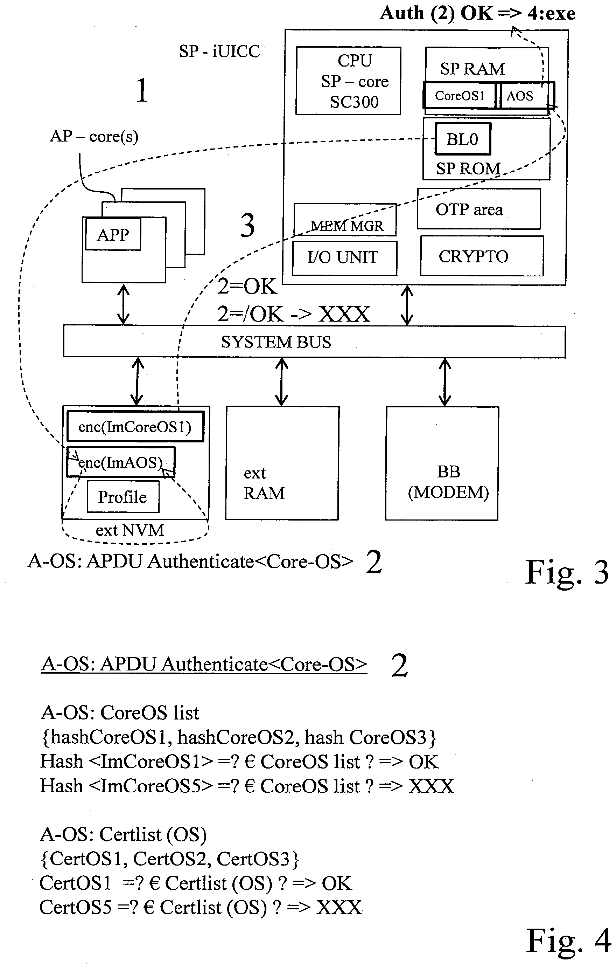

Fig. 3 zeigt das Chipset aus Fig. 1, mit einer Inbetriebnahme eines Anwendungs-OS durch den Bootloader BL0 und Authentisierung / Verifizierung des Core-OS durch das Anwendungs-OS AOS.

Im Folgenden wird anhand von Fig. 3 ein Verfahren zur Verifizierung des Core-OS durch das Anwendungs-OS beschrieben, bei der Inbetriebnahme des Anwendungs-OS durch den Bootloader BL0. (Schritt 1): Der Bootloader BL0 ruft das verschlüsselte Speicherabbild enc(ImAOS) des Anwendungs-OS AOS im externen nicht-flüchtigen Speicher ext NVM zur Ausführung auf. Durch den Aufruf des Anwendungs-OS AOS wird eine Authentisierung / Verifizierung des Core-OS durch das Anwendungs-OS AOS veranlasst (getriggert). Die Details der Authentisierung / Verifizierung werden nachfolgend noch anhand von Fig. 4 erläutert. Anlässlich einer erfolgreichen Authentisierung / Verifizierung des Core-OS durch das Anwendungs-OS wird (Schritt 3: dec) das Speicherabbild Image enc(ImAOS) des Anwendungs-OS entschlüsselt und (Schritt 4: exe) im internen Arbeitsspeicher SP RAM des Secure Processor SP zur Ausführung gebracht. Endet die in Schritt 2 durchgeführte Authentisierung / Verifizierung des Core-OS durch das Anwendungs-OS mit einem Ergebnis "nicht erfolgreich verifiziert/ authentisiert", wird das Anwendungs-OS AOS nicht zur Ausführung gebracht.

Fig. 4 zeigt, im Verfahren zu Fig. 3, die Details der Authentisierung / Verifizierung des Core-OS durch das Anwendungs-OS, gemäß zwei Ausführungsformen der Erfindung.

Gemäß einer ersten Ausführungsform ist, zugänglich für das Anwendungs-OS, eine Liste CoreOS list von Hashwerten über zugelassene Cores-OS in einem für das Anwendungs-OS zugänglichen Speicher gespeichert, z.B. direkt im ext NVM, oder alternativ auf einem externen Server, auf den das Anwendungs-OS Zugriffsmöglichkeit hat. Die Liste enthält Hashwerte hashCoresOS1, hashCoresOS2, hashCoresOS3 von drei zulässigen Cores-Betriebssystemen CoreOS1, CoresOS2 und CoreOS3. Im Beispiel aus Fig. 3 ist im ext NVM das Speicherabbild enc(ImCoreOS1) von CoreOS1 (eins) gespeichert, also eines zugelassenen CoreOS. Der Secure Processor SP berechnet über das tatsächlich vorhandene CoreOS1 einen Hashwert und vergleicht ihn mit den in der CoreOS list gespeicherten Hashwerten. Da hashCoreOS1 in der Liste ist, sind die Hashwerte gleich, folglich wird die Authentisierung / Verifizierung des Core-OS durch das Anwendungs-OS mit einem Ergebnis "erfolgreich verifiziert/authentisiert" enden und, im Verfahren gemäß Fig. 3, das Anwendungs-OS zur Ausführung gebracht werden. Wäre im ext NVM ein CoreOS7 (sieben) gespeichert, und ein Hashwert über CoreOS7 berechnet, fände sich in der Liste CoreOS list kein entsprechender Hashwert. Die Authentisierung / Verifizierung des Core-OS durch das Anwendungs-OS würde mit einem Ergebnis "nicht erfolgreich verifiziert/ authentisiert" enden und, im Verfahren gemäß Fig. 3, das Anwendungs-OS nicht zur Ausführung gebracht.

Gemäß einer zweiten Ausführungsform ist, zugänglich für das Anwendungs-OS, eine Liste Certlist von Zertifikaten Cert=S1, CertOS2, CertOS3 zugelassener Cores-OS CoreOS1, CoreOS2, CoreOS3 in einem für das Anwendungs-OS zugänglichen Speicher gespeichert, z.B. direkt im ext NVM, oder alternativ auf einem externen Server, auf den das Anwendungs-OS Zugriffsmöglichkeit hat. Die Liste Certlist von Zertifikaten ist analog zur Liste CoreOS list von Hashwerten, nur dass statt Hashwerten Zertifikate von zugelassenen Core OS gespeichert sind. Bei dieser Ausführungsform weist das tatsächlich vorhandene Core-OS1 ein ihm zugeordnetes Zertifikat CertOS1 auf. Entsprechend wird bei der Authentisierung / Verifizierung des Core-OS durch das Anwendungs-OS das Zertifikat des tatsächlich vorhandenen Core OS geprüft. Enthält der ext NVM das zugelassene CoreOS1, wird das Anwendungs-OS zur Ausführung gebracht. Enthält der ext NVM das unbekannte oder nicht-zugelassene CoreOS5, das nicht in der Zertifikateliste Certlist ist, wird das Anwendungs-OS, hier CoreOS5, nicht zur Ausführung gebracht.

## Patentansprüche

1. Chipset zum Einbau in ein mobilfunkfähiges Endgerät (ME), in dem als Secure Processor (SP) des Chipset ein Teilnehmeridentitätsmodul (iUICC) in einen Baseband Processor des Chipset oder in einen Application Processor des Chipset integriert ist,
**dadurch gekennzeichnet, dass**
im Chipset ein Betriebssystem, OS, des Secure Processor (SP) eingerichtet oder einrichtbar ist, wobei das Betriebssystem ein Core-OS und ein Anwendungs-OS (A-OS) umfasst, wobei das Core-OS grundlegende Funktionalitäten zur Ansteuerung der physikalischen Elemente des integrierten Teilnehmeridentitätsmoduls umfasst, wobei das Anwendungs-OS anwendungsorientierte Funktionalitäten des integrierten Teilnehmeridentitätsmoduls umfasst,
wobei das Anwendungs-OS (A-OS) eine Core-OS-Verifizierungs-Einrichtung umfasst, die dazu eingerichtet ist, anlässlich Inbetriebnahme des Anwendungs-OS (A-OS) die Integrität des Core-OS zu verifizieren und nur höchstens im Fall erfolgreicher Verifizierung des Core-OS die Inbetriebnahme des Anwendungs-OS (A-OS) fortzusetzen und im Fall nicht erfolgreicher Verifizierung eine Fehlermaßnahme zu veranlassen oder/ und die Inbetriebnahme des Anwendungs-OS (A-OS) zu unterbrechen oder beenden, wobei ein im Secure Processor (SP) implementierter Bootloader (BLO) dazu eingerichtet ist, unmittelbar oder mittelbar zu erzwingen, dass das Anwendungs-OS (A-OS) bei seiner Inbetriebnahme die Core-OS-Verifizierungs-Einrichtung anwendet, um das Core-OS zu verifizieren.

2. Chipset nach Anspruch 1, weiter umfassend:
- einen dem Secure Processor (SP) exklusiv zugeordneten internen sicheren Arbeitsspeicher (UICC RAM);
- einen im Chipset aber außerhalb des Secure Processor (SP) gelegenen externen nicht-flüchtigen Speicher (ext NVM), in dem ein - vorzugsweise verschlüsseltes - Speicherabbild (ImCoreOS) des Core-OS gespeichert ist;
- wobei der im Secure Processor (SP) implementierte Bootloader (BLO) dazu eingerichtet ist, das Core-OS aus dem externen nicht-flüchtigen Speicher (ext NVM) in den internen sicheren Arbeitsspeicher (UICC RAM) zu laden, ggf. zu entschlüsseln, und im internen sicheren Arbeitsspeicher (UICC RAM) in Betrieb zu nehmen.

3. Chipset nach Anspruch 1, weiter umfassend:
- einen dem Secure Processor (SP) exklusiv zugeordneten internen sicheren Arbeitsspeicher (UICC RAM);
- einen im Chipset aber außerhalb des Secure Processor (SP) gelegenen externen nicht-flüchtigen Speicher (ext NVM), in dem ein - vorzugsweise verschlüsseltes - Speicherabbild (ImAOS) des Anwendungs-OS gespeichert ist;
- wobei der im Secure Processor (SP) implementierte Bootloader (BL0) dazu eingerichtet ist, das Anwendungs-OS aus dem externen nicht-flüchtigen Speicher (ext NVM) in den internen sicheren Arbeitsspeicher (UICC RAM) zu laden, ggf. zu entschlüsseln, und im internen sicheren Arbeitsspeicher (UICC RAM) in Betrieb zu nehmen.

4. Chipset nach einem der Ansprüche 2 bis 3, wobei das Speicherabbild (Im-CoreOS) des Core-OS bzw. das Speicherabbild (ImAOS) des Anwendungs-OS verschlüsselt im externen nicht-flüchtigen Speicher (ext NVM) gespeichert ist und exklusiv vom Secure Processor (SP) zur Ausführung gebracht werden kann.

5. Chipset nach Anspruch 1, weiter umfassend:
- einen im Chipset aber außerhalb des Secure Processor (SP) gelegenen externen nicht-flüchtigen Speicher (ext NVM), in dem ein - vorzugsweise verschlüsseltes - Speicherabbild (ImCoreOS) des Core-OS gespeichert ist; wobei das Anwendungs-OS (A-OS) dazu eingerichtet ist, das Speicherabbild (ImCoreOS) des Core-OS auf Integrität zu verifizieren.

6. Chipset nach Anspruch 5, wobei die Core-OS-Verifizierungs-Einrichtung dazu eingerichtet ist, eine Prüfsumme oder einen Hashwert über das im externen nicht-flüchtigen Speicher (ext NVM) gespeicherte Speicherabbild (ImCoreOS) des Core-OS zu berechnen und auf Übereinstimmung oder Entsprechung mit einer Prüfsumme bzw. einem Hashwert aus einer Liste (CoreOS list) von Prüfsummen bzw. Hashwerten (hashCoreOS1, hashCoreOS2, hash CoreOS3) zulässiger Core-OS (OS1,2,3) zu verifizieren.

7. Chipset nach Anspruch 6, wobei die Liste gespeichert ist:
- im Chipset; oder
- bei einem externen Server; oder
- sowohl im Chipset als auch bei einem externen Server, wobei die Listen im Chipset und beim externen Server bedarfsweise miteinander synchronisiert werden.

8. Chipset nach einem der Ansprüche 1 bis 7, wobei die Core-OS-Verifizierungs-Einrichtung dazu eingerichtet ist, die Integrität des Core-OS mittels eines durch eine vertrauenswürdige externe Stelle erstellten Zertifikats (Cert1, Cert2, Cert3) zu verifizieren, insbesondere gegenüber eines Liste (Certlist) zulässiger Cores-OS (OS1, OS2, OS3).

## Claims

1. A chipset for installation in a mobile radio-enabled end device (ME), in which as a secure processor (SP) of the chipset a subscriber identity module (iUICC) is integrated in a baseband processor of the chipset or in an application processor of the chipset, **characterized in that**
in the chipset, an operating system, OS, of the secure processor (SP) is arranged or arrangeable, the operating system comprising a core OS an application OS (A-OS), wherein the core OS comprises basic functionalities for controlling the physical elements of the integrated subscriber identity module, wherein the application OS comprises application-oriented functionalities of the integrated subscriber identity module,
wherein the application OS (A-OS) comprises a core OS verification apparatus which is arranged to verify the integrity of the core OS upon the putting into operation of the application OS (A-OS) and to continue the putting into operation of the application OS (A-OS) at most only in the case of a successful verification of the core OS and to cause a fault measure and/or to interrupt or terminate the putting into operation of the application OS (A-OS) in the case of an unsuccessful verification,
wherein a bootloader (BLO) implemented in the secure processor (SP) is arranged to directly or indirectly enforce that the application OS (A-OS) applies the core OS verification apparatus upon it being put into operation in order to verify the core OS.

2. The chipset according to claim 1, further comprising:
- an internal secure working memory (UICC RAM) exclusively assigned to the secure processor (SP);
- an external non-volatile memory (ext NVM) located in the chipset but outside the secure processor (SP), in which a - preferably encrypted - memory image (ImCoreOS) of the core OS is stored;
- wherein the bootloader (BLO) implemented in the secure processor (SP) is arranged to load the core OS from the external non-volatile memory (ext NVM) into the internal secure working memory (UICC RAM), to decrypt it where applicable, and to put it into operation in the internal secure working memory (UICC RAM).

3. The chipset according to claim 1, further comprising:
- an internal secure working memory (UICC RAM) exclusively assigned to the secure processor (SP);
- an external non-volatile memory (ext NVM) located in the chipset but outside the secure processor (SP), in which a - preferably encrypted - memory image (ImAOS) of the application OS is stored;
- wherein the bootloader (BLO) implemented in the secure processor (SP) is arranged to load the application OS from the external non-volatile memory (ext NVM) into the internal secure working memory (UICC RAM), to decrypt it where applicable, and to put it into operation in the internal secure working memory (UICC RAM).

4. The chipset according to any of claims 2 to 3, wherein the memory image (ImCoreOS) of the core OS or the memory image (ImAOS) of the application OS is stored encrypted in the external non-volatile memory (ext NVM) and can be brought to execution exclusively by the secure processor (SP).

5. The chipset according to claim 1, further comprising:
- an external non-volatile memory (ext NVM) located in the chipset but outside the secure processor (SP), in which a - preferably encrypted - memory image (ImCoreOS) of the core OS is stored; the application OS (A-OS) being arranged to verify the integrity of the memory image (IMCoreOS) of the core OS.

6. The chipset according to claim 5, wherein the core OS verification apparatus is arranged to calculate a checksum or hash value over the memory image (ImCoreOS) of the core OS stored in the external non-volatile memory (ext NVM) and to verify that it matches or corresponds to a checksum or a hash value from a list (CoreOS list) of checksums or hash values (hashCoreOS1, hashCoreOS2, hashCoreOS3) of admissible core OS (OS1,2,3).

7. The chipset according to claim 6, wherein the list is stored:
- in the chipset; or
- at an external server; or
- both in the chipset and at an external server, the lists in the chipset and at the external server being synchronized with each other as needed.

8. The chipset according to any of claims 1 to 7, wherein the core OS verification apparatus is arranged to verify the integrity of the core OS by means of a certificate (Cert1, Cert2, Cert3) issued by a trustworthy external entity, in particular against a list (Certlist) of admissible core OS (OS1, OS2, OS3).

## Revendications

1. Jeu de puces pour encastrement dans un terminal (ME) apte à la radiocommunication mobile, dans lequel, en tant que Secure Processor (SP) du jeu de puces, un module d'identification d'abonné (iUICC) est intégré dans un processeur bande de base du jeu de puces ou dans un processeur d'application du jeu de puces, **caractérisé en ce que**, dans le jeu de puces, un système d'exploitation, OS, du Secure Processor (SP) est installé ou peut être installé, cependant que le système d'exploitation comprend un Core-OS et un OS d'application (A-OS), cependant que le Core-OS comprend des fonctionnalités de base pour la commande des éléments physiques du module intégré d'identification d'abonné, cependant que le OS d'application comprend des fonctionnalités du module intégré d'identification d'abonné orientées application,
cependant que le OS d'application (A-OS) comprend un dispositif de vérification de Core-OS qui est conçu pour, à l'occasion d'une mise en service du OS d'application (A-OS), vérifier l'intégrité du Core-OS et ne poursuivre la mise en service du OS d'application (A-OS) qu'au plus dans le cas d'une vérification du Core-OS aboutie, et pour, dans le cas d'une vérification non aboutie, déclencher une mesure d'erreur et/ou interrompre ou terminer la mise en service du OS d'application (A-OS),
cependant qu'un chargeur d'amorçage (BLO) mis en œuvre dans le Secure Processor (SP) est conçu pour forcer directement ou indirectement le OS d'application (A-OS) à utiliser lors de sa mise en service le dispositif de vérification de Core-OS pour vérifier le Core-OS.

2. Jeu de puces selon la revendication 1, comprenant en outre :
- une mémoire vive interne (UICC RAM) sécurisée affectée exclusivement au Secure Processor (SP) ;
- une mémoire non volatile externe (ext NVM) située dans le jeu de puces, mais à l'extérieur du Secure Processor (SP), dans laquelle une image mémoire (ImCoreOS) - de préférence cryptée - du Core-OS est mémorisée ;
- cependant que le chargeur d'amorçage (BLO) mis en œuvre dans le Secure Processor (SP) est conçu pour, depuis la mémoire non volatile externe (ext NVM), charger le Core-OS dans la mémoire vive interne (UICC RAM) sécurisée, éventuellement le décrypter et le mettre en service dans la mémoire vive interne (UICC RAM) sécurisée.

3. Jeu de puces selon la revendication 1, comprenant en outre :
- une mémoire vive interne (UICC RAM) sécurisée affectée exclusivement au Secure Processor (SP) ;
- une mémoire non volatile externe (ext NVM) située dans le jeu de puces, mais à l'extérieur du Secure Processor (SP), dans laquelle une image mémoire (ImAOS) - de préférence cryptée - du OS d'application est mémorisée ;
- cependant que le chargeur d'amorçage (BLO) mis en œuvre dans le Secure Processor (SP) est conçu pour, depuis la mémoire non volatile externe (ext NVM), charger le OS d'application dans la mémoire vive interne (UICC RAM) sécurisée, éventuellement le décrypter et le mettre en service dans la mémoire vive interne (UICC RAM) sécurisée.

4. Jeu de puces selon une des revendications de 2 à 3, cependant que l'image mémoire (ImCoreOS) du Core-OS ou l'image mémoire (ImAOS) du OS d'application est mémorisée sous forme cryptée dans la mémoire non volatile externe (ext NVM) et peut être amenée à exécution exclusivement par le Secure Processor (SP).

5. Jeu de puces selon la revendication 1, comprenant en outre :
- une mémoire non volatile externe (ext NVM) située dans le jeu de puces, mais à l'extérieur du Secure Processor (SP), dans laquelle une image mémoire (ImCoreOS) - de préférence cryptée - du Core-OS est mémorisée ;
- cependant que le OS d'application (A-OS) est conçu pour vérifier l'image mémoire (ImCoreOS) du Core-OS quant à son intégrité.

6. Jeu de puces selon la revendication 5, cependant que le dispositif de vérification de Core-OS est conçu pour calculer une somme de contrôle ou une valeur de hachage sur l'image mémoire (ImCoreOS) du Core-OS mémorisée dans la mémoire non volatile externe (ext NVM) et pour en vérifier la concordance ou la correspondance avec une somme de contrôle ou une valeur de hachage d'une liste (CoreOS list) de sommes de contrôle ou de valeurs de hachage (hashCoreOS1, hashCoreOS2, hashCoreOS3) de Core-OS (OS1,2,3) admissibles.

7. Jeu de puces selon la revendication 6, cependant que la liste est mémorisée :
- dans le jeu de puces ; ou
- à un serveur externe ; ou
- tant dans le jeu de puces qu'à un serveur externe, cependant que les listes sont, selon le besoin, synchronisées entre elles dans le jeu de puces et au serveur externe.

8. Jeu de puces selon une des revendications de 1 à 7, cependant que le dispositif de vérification de Core-OS est conçu pour vérifier l'intégrité du Core-OS au moyen d'un certificat (Cert1, Cert2, Cert3) établi par un poste externe fiable, en particulier par rapport à une liste (Certlist) de Core-OS admissibles (OS1, OS2, OS3).
